# EUROPEAN PATENT APPLICATION

(11) **EP 2 573 331 A2**
(43) Date of publication of application: **27.03.2013**
(21) Application number: 12184361.9
(22) Date of filing: 14.09.2012
(51) Int. Cl.: F01D 17/14, F02C 7/042, F02C 7/055, F02C 9/20

(54) **Inlet fluid flow and impingement angle control**

(30) Priority: 23.09.2011 US 201113243894
(71) Applicant: GENERAL ELECTRIC COMPANY, Schenectady, NY 12345 (US)
(72) Inventor: Tillery, Steven William, Greenville, SC South Carolina 29615 (US)
(74) Representative: Cleary, Fidelma

(57) **Abstract**

A compressor (110) of a gas turbine system comprises a fluid flow control device (220) and an impingement angle control device (230) downstream of the fluid flow control device. The fluid flow control device (220) controls a fluid flow rate of fluid entering an inlet (200) of the compressor, and the impingement angle control device (230) controls an impingement angle of the fluid flowing to rotor blades (240) in the compressor. The fluid flow control device and the impingement angle control device are independently operable.

## Description

One or more aspects of the present invention relate to control of inlet fluid flow and impingement angle of fluid flow in gas turbines.

### BACKGROUND OF THE INVENTION

In many conventional gas turbines, inlet guide vanes (IGV) are the primary mechanisms for flow control. IGVs serve two primary purposes - controlling the flow rate of air entering the compressor, and setting the impingement angle of the air entering the compressor. In many cases, both of these purposes cannot be optimally fulfilled using IGVs alone.

Recently, variable guide vanes (VGV), which comprises multiple stages of vanes), can be used to set both the flow rate and the impingement angle to some degree. However, VGVs are more or less limited to new units. Retrofitting existing IGV based turbine systems with VGVs is impractical, uneconomical and technically difficult.

### BRIEF SUMMARY OF THE INVENTION

A non-limiting aspect of the present invention relates to a compressor of a gas turbine system arranged to compress fluid for combustion in a combustor with fuel. The compressor comprises a fluid flow control device and an impingement angle control device downstream of the fluid flow control device. The fluid flow control device is arranged to control a fluid flow rate of fluid entering an inlet of the compressor, and the impingement angle control device is arranged to control an impingement angle of the fluid flowing to rotor blades in the compressor. The fluid flow control device and the impingement angle control device are arranged to be independently operable. Another non-limiting aspect of the present invention relates to a gas turbine system. The turbine system comprises a compressor, a fuel delivery unit, a combustor, a turbine, and a system controller. The compressor is arranged to compress fluid, the fuel delivery unit is arranged to deliver fuel, the combustor is arranged to mix the compressed fluid discharged from the compressor with the fuel from the fuel delivery unit and combust the fuel and fluid mixture, and the turbine is arranged convert heat energy released from the combustion of the fuel and fluid mixture to mechanical energy for driving a load. The system controller is arranged to control an overall operation of the gas turbine system. The compressor comprises a fluid flow control device and an impingement angle control device downstream of the fluid flow control device. The fluid flow control device is arranged to control a fluid flow rate of fluid entering an inlet of the compressor based on a fluid flow rate control signal from the system controller, and the impingement angle control device is arranged to control an impingement angle of the fluid flowing to rotor blades in the compressor based on an impingement angle control signal from the system controller. The fluid flow control device and the impingement angle control device are arranged to be independently operable.

Another non-limiting aspect of the present invention relates to a method to control a fluid flow rate of fluid entering an inlet of a compressor of a gas turbine system and/or to control an impingement angle of the fluid flowing to rotor blades in the compressor. The method may be performed at or on behalf of a system controller of the gas turbine system. The method comprises receiving one or more sensor signals from one or more of the compressor, a fuel delivery unit, a combustor and a turbine of the gas turbine system or receiving one or more externally provided operation input signals or receiving both. The method also comprises setting a desired fluid flow rate or setting a desired impingement angle or setting both based on the sensor and/or operation input signals. The method further comprises transmitting a fluid flow rate control signal in accordance with the desired fluid flow rate to a fluid flow control device or transmitting an impingement angle control signal in accordance with the desired impingement angle to an impingement angle control device or transmitting both.

The invention will now be described in greater detail in connection with the drawings identified below.

### BRIEF DESCRIPTION OF THE DRAWINGS

These and other features of the present invention will be better understood through the following detailed description of example embodiments in conjunction with the accompanying drawings, in which:
Figure 1 illustrates an example gas turbine system according to an aspect of the present invention;
Figure 2 illustrates an example intake of a gas turbine system according to an aspect of the present invention;
Figure 3 illustrates a flowchart of an example method to control one or both of a fluid flow rate and an impingement angle according to an aspect of the present invention;
Figure 4 illustrates a flow chart of an example process to account for an impact that an impingement angle control device may have on a fluid flow rate according to an aspect of the present invention;
Figure 5 illustrates a flow chart of an example process to account for effects on multiple rotor stages when determining one or both of a fluid flow rate and an impingement angle according to an aspect of the present invention;
Figure 6 illustrates a flow chart of an example process to reduce or eliminate stall possibilities in determining one or both of a fluid flow rate and an impingement angle according to an aspect of the present invention;
Figure 7 illustrates a flow chart of an example process to set a desired fluid flow rate when an impingement angle is externally specified according to an aspect of the present invention; and
Figure 8 illustrates a flow chart of an example process to set a desired impingement angle rate when a fluid flow rate is externally specified according to an aspect of the present invention.

### DETAILED DESCRIPTION OF THE INVENTION

Novel apparatus, system and method for controlling a fluid flow rate and impingement angle of a flow of fluid entering a compressor of a gas turbine system are described. For ease of reference, the fluid flow rate and the impingement angle will be referred to as fluid flow parameters. Due at least in part to the ability to independently control each of the fluid flow parameters provided operational flexibility is enhanced by the novel inventive aspects.

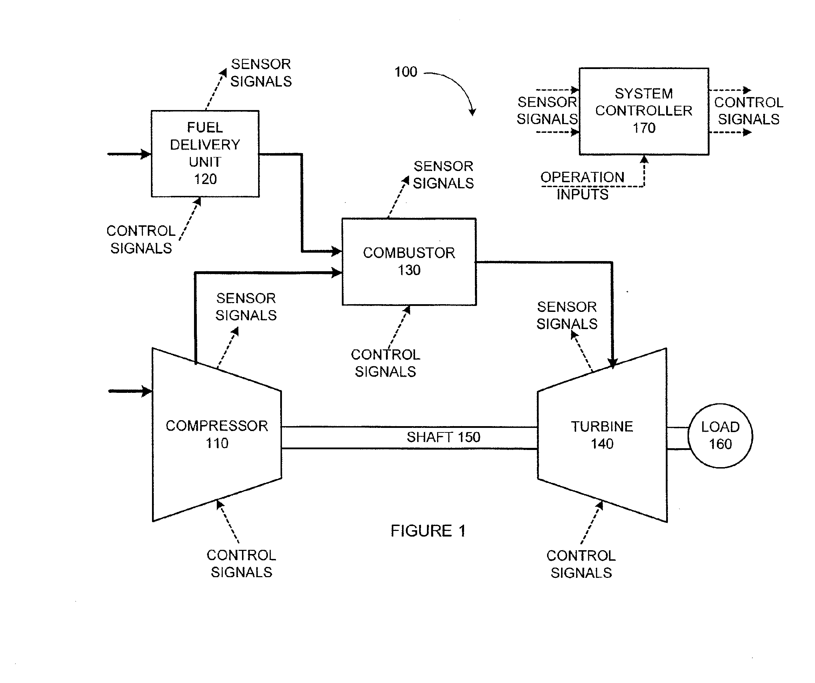

Figure 1 illustrates an example gas turbine system 100 according to an aspect of the present invention. As seen, the system 100 includes a combustor 130 that generates high energy gases to drive a gas turbine 140 which can be used to drive a load 160 to perform useful work such as generating electricity. The turbine 140 also drives a shaft 150 which is operatively coupled to a compressor 110, which compresses and provides compressed fluid containing oxidant, e.g., air, to the combustor 130. The system 100 includes a fuel delivery unit 120 which delivers fuel to the combustor 130. A system controller 170 is arranged to control the operation of the system 100. As seen, the system controller 170 receives as inputs sensor signals from sensors monitoring the system units (compressor 110, fuel delivery unit 120, combustor 130, and turbine 140). While not shown, sensors can also be provided to monitor the load 160 and the shaft 150. The system controller 170 can also receive operation inputs such as an instruction from an operator to start up, partial load operation, full load operation, shut down, and so on. Based on the inputs, the system controller 170 outputs control signals to the system units to control the system operation. To minimize clutter in Figure 1, sensor signals from the units 110, 120, 130 and 140 to the system controller 170 and control signals from the controller 170 to the units 110, 120, 130 and 140 are represented as dashed arrows.

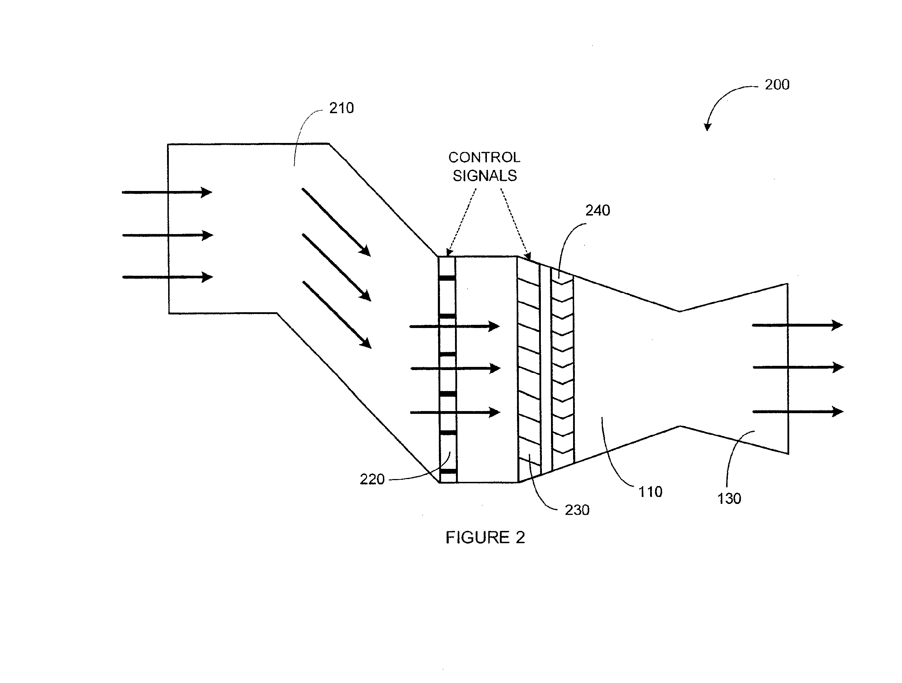

Figure 2 illustrates an example intake 200 of the gas turbine system 100 according to an aspect of the present invention. In this figure, flow of gaseous fluid that includes oxidant(s), e.g., air, is represented as thick arrows. As seen, the intake 200 comprises a fluid flow control device 220 and an impingement angle control device 230. The fluid flow control device 220 is arranged to control a fluid flow rate of the fluid entering an inlet 210 of the compressor 110. Downstream of the fluid flow control device 220, the impingement angle control device 230 is arranged to control an impingement angle of the fluid flowing to rotor blades 240 in the compressor 110.

An important aspect of the example intake 200 is that the fluid flow control device 220 and the impingement angle control device 230 are independently operable, i.e., each can be controlled independent of the other. Recall that in conventional turbines, IGVs are used to set both the flow rate and the impingement angle. Unfortunately, an optimum combination of flow rate and impingement angle is difficult to achieve using the IGVs alone.

The intake 200, being able to independently control the flow rate and the impingement angle, allows the optimum or close to optimum combination to be achieved. In one aspect, one or both of the fluid flow control device 220 and the impingement angle control device 230 are controlled through control signals, shown as dashed arrows in Figure 2, received from the system controller 170. In particular, the fluid flow control device 220 is arranged to control the fluid flow rate based on a fluid flow rate control signal received from the system controller 170, and the impingement angle control device 230 is arranged to control the impingement angle based on an impingement angle control signal also received from the system controller 170.

To minimize clutter in Figure 2, only the first stage of rotor blades 240 immediately downstream of the impingement angle control device 230 is shown. But it is fully expected that the compressor 110 can include multiple stages of rotor blades 240 downstream of the impingement angle control device 230. The impingement angle of the fluid flow is particularly relevant to the first stage of the rotor blades 240. When there are multiple stages, the impingement angle on the first stage can influence the impingement angles on subsequent stages. Thus, in one aspect, the impingement angle on the first stage is controlled in consideration of the subsequent stages, for example, to reduce or eliminate risk of stall.

An example of the fluid flow control device 220 is a plurality of louvers. Note that any controllable mechanism - which can be a single device or a combination of devices - capable of varying the fluid flow rate can serve as the fluid flow control device 220.

An example of the impingement angle control device 230 is a plurality of controllable dynamic foils. IGVs are examples of such dynamic foils. Note that VGVs may also serve as controllable dynamic foils. Such a system may provide very fine way to control of both the fluid flow rate and the impingement angles. But again, any controllable mechanism - which can be a single device or a combination of devices - capable of varying the impingement angle can serve as the impingement angle control device 230.

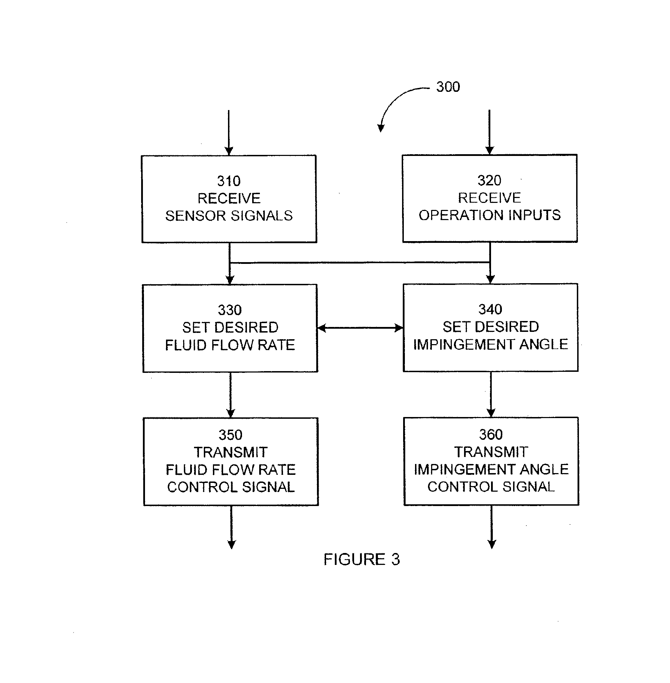

Figure 3 is an example flowchart of a method 300 performed at or on behalf of the system controller 170 to control one or both of the fluid flow rate of the fluid entering the inlet 210 of the compressor 110, and the impingement angle of the fluid flowing to the rotor blades 240 of the compressor. In one aspect, the system controller 170 controls the operations of one or both of the fluid flow control device 220 and the impingement angle control device 230.

In step 310, the system controller 170 receives sensor signal(s) from any one or more units of the gas turbine system 100. As seen in Figure 1, the sensor signals may be from sensors monitoring the compressor 110, the fuel delivery unit 120, the combustor 130, and/or the turbine 140. Examples of sensor signals include signals indicating fluid velocity, density, discharge temperature and oxidant levels from the compressor 110; Wobbe Index and fuel temperature from the fuel delivery unit 120; flame temperature and combustion pressure from the combustor 130; and rotor speed and acceleration from the turbine 140.

It is not necessary that the sensor signals from everyone of these units be received. Indeed, it is possible to control the operation of the system 100 without the benefit of the sensor signals, e.g., when the system operates under a very tightly controlled environment. Nonetheless, it is desirable that sufficient sensor signals be received to maintain adequate operation of the system. Note that in addition to or in lieu of receiving sensor signals from these units, signals indicative of the characteristics of the shaft 150 and/or the load 160 on the system 100 may be received.

Referring back to Figure 3, in step 320, the system controller 170 receives externally provided operation input signal or signals. Here, externally provided signals are any signals that are not provided through the sensors, but which nonetheless can factor into the decision making process in operating the gas turbine system 100. The system controller 170 may receive the operation input signals through an interface with another system or may receive the operation signals directly from an operator. Examples of operation input signals include instructions to start up, partial load operation, full load operation, shut down, and so on.

It is not always necessary the operation input signals be provided to operate the system 100. For example, once the system 100 reaches full load operation, the system controller 170 may maintain the full load operation based on the sensor inputs, at least until the system controller 170 receives operation input signals instructing that the operation mode of the system 100 be changed, e.g., to shut down.

In Figure 3, when the sensor signals are present, step 310 may be performed, and when the operation inputs are present, step 320 may be performed. The order in which steps 310 and 320 are performed is not particularly limited. Also, it is contemplated that the method 300 can proceed even when only one of the steps 310 and 320 is performed. In other words, completing both steps is not a prerequisite to move on to the subsequent steps of the method 300.

In step 330, the system controller 170 sets a desired fluid flow rate based the sensor input signals when present, based on the operation input signals when present, or based on sensor and operation input signals when both signal types are present. Note that even when both signal types are present, the system controller 170 in step 330 may still set the desired fluid flow rate based on one or the other signal types. Similarly, in step 340, the system controller 170 sets a desired impingement angle based the sensor input signals when present, based on the operation input signals when present, or based on sensor and operation input signals when both signal types are present. Again, the desired impingement angle may still set the desired impingement angle based on one signal type even when both signal types are available.

The order in which steps 330 and 340 are performed is not particularly limited. Either or both of these steps can be performed, depending on the circumstances, when one or both of the sensor and operation input signals are present. Steps 330 and 340 may be performed independent of each other. As a result, the system controller 170 may perform these steps in parallel, may perform one step but not the other depending on the circumstances, or may perform both steps one after the other.

It should not be lost that one of the goals is to optimize the combination of the fluid flow rate and the impingement angle parameters. Thus, when steps 330 and 340 are both performed, the system controller 170 sets an optimum combination of the desired flow rate and impingement angle.

But when only one of the steps is performed, there is still opportunity to optimize the parameters, albeit at a reduced flexibility. For example, if only step 330 is performed, then the desired fluid flow rate should be set taking into consideration the actual impingement angle. In one non-limiting aspect, the actual impingement angle may be directly determined, for example, through a signal from a sensor. But in another aspect, the actual impingement angle can be calculated or inferred through other measurable parameters. For example, the actual impingement angle can be determined in consideration of the fluid density and velocity, the shape of the foils, rotational speed of the rotor blades, and so on. In yet another aspect, the desired impingement angle that was set in a previous performance of step 340 can be assumed to be the actual impingement angle. The system controller 170 may set the desired flow rate based on the actual impingement angle in step 330.

On the other hand, if only step 340 is performed, then the desired impingement angle should be set taking into consideration the actual fluid flow rate. Again, the actual fluid flow rate may be directly determined or indirectly determined, i.e., calculated or inferred, based on other measurable parameters; and/or assumed to be the same as the desired fluid flow rate set in a previous performance of step 330. When indirectly determined, some or all measurable parameters used to indirectly determine the actual fluid flow rate may be the same or different from the parameters used to determine the actual impingement angle.

Upon setting the desired fluid flow rate in step 330, the system controller 170 transmits a fluid flow rate control signal in accordance with the desired fluid flow rate to the fluid flow control device 220 in step 350. Likewise, upon determining the desired impingement angle in step 340, the system controller 170 transmits an impingement angle control signal in accordance with the desired impingement angle to the impingement angle control device 230. As noted above and illustrated in Figures 1 and 2, the fluid flow control device 220 controls the fluid flow rate based on the fluid flow rate control signal and the impingement angle control device 230 controls the impingement angle based on the impingement angle control signal.

In one aspect, the fluid flow parameters - fluid flow rate and impingement angle - are defined at a common location, e.g., at a point immediately downstream of the impingement angle control device 230. At this point, the fluid has passed through the impingement angle control device 230.

To control the impingement angle, the impingement angle control device 230 will in most instances physically alter the direction of the fluid flow. As such, the impingement angle control device 230 can also influence the flow rate. For example, a conventional compressor with IGVs can be retrofitted to incorporate the fluid flow control device 220 and the existing IGVs can be used as the impingement angle control device 230. Note that in Figure 2, the impingement angle control device 230 is downstream of the fluid flow control device 220. Thus, after the fluid flow control device 220 controls the rate flowing therethrough, the flow rate can be further impacted after flowing through the impingement angle control device 230

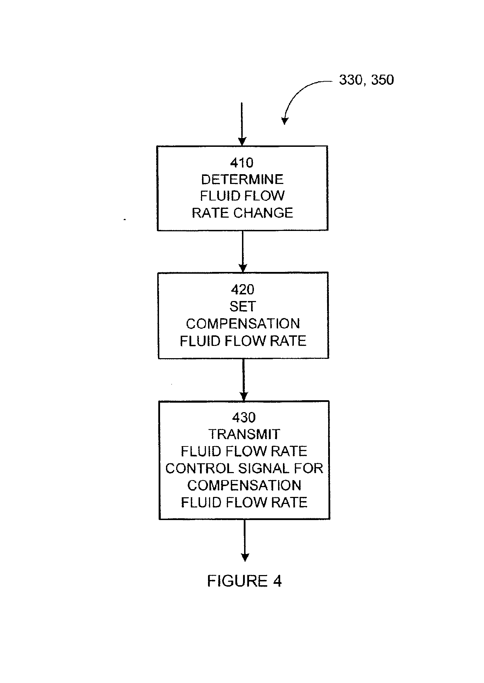

Figure 4 illustrates a flow chart of an example process to implement steps 330 and 350 to account for the impact that the impingement angle control device 230 may have on the fluid flow rate according to an aspect of the present invention. In step 410, the system controller 170 determines a flow rate change based on the impingement angle. Here, the flow rate change is defmed as an amount of change in the flow rate of the fluid passing through the impingement angle control device 230. For example, one may expect that the amount of flow rate change would correspond to the severity of the change in the direction of the fluid flow represented by the impingement angle.

In step 420, the system controller 170 sets a compensation fluid flow rate that is sufficient to compensate for flow rate change that occurs through the impingement angle control device 230 such that the desired fluid flow rate will result after having passed through the impingement angle control device 230. In this step, the compensation fluid flow rate is the flow rate of the fluid before passing through the impingement angle control device 230. For example, if the desired fluid flow rate is *X* and the flow rate change is - Δ*X* (negative since the flow rate is likely to be reduced), then the compensation flow rate could be *X* + Δ*X* .

Of course, in both steps 410 and 420, the system controller 170 can and should take other factors into account such as the geometry of the intake 200, density and velocity of the fluid at intake, etc. (which can be provided through sensors) so that more accurate results can be calculated. In step 430, the system controller transmits the fluid flow rate control signal in accordance with the compensation fluid flow rate.

As indicated above, IGVs of retrofitted conventional systems may have significant impact on the fluid flow rate, thus making the above-described compensation process desirable. However, for newer systems, dynamic foils can be designed focusing more on impingement and less on flow control. For example, the new IGVs could be designed to limit its influence on the flow.

Referring back to Figure 2, it is indicated above that while only the first stage of rotor blades 240 immediately downstream of the impingement angle control device 230 is shown, it is expected that the compressor 110 can include subsequent stages of rotor blades 240 downstream. That is, there can be a plurality of rotor blade stages in which the first stage is shown in Figure 2.

When there are multiple stages of rotor blades, the fluid flow rate and/or the impingement angle of the fluid to the first stage can effect or influence the fluid flow rates and/or the impingement angles on subsequent stages, which in turn can impact the overall performance of the gas turbine system 110. For example, NOx and CO emissions may increase or decrease, system efficiency may rise or fall, change in the risk of stall, and so on.

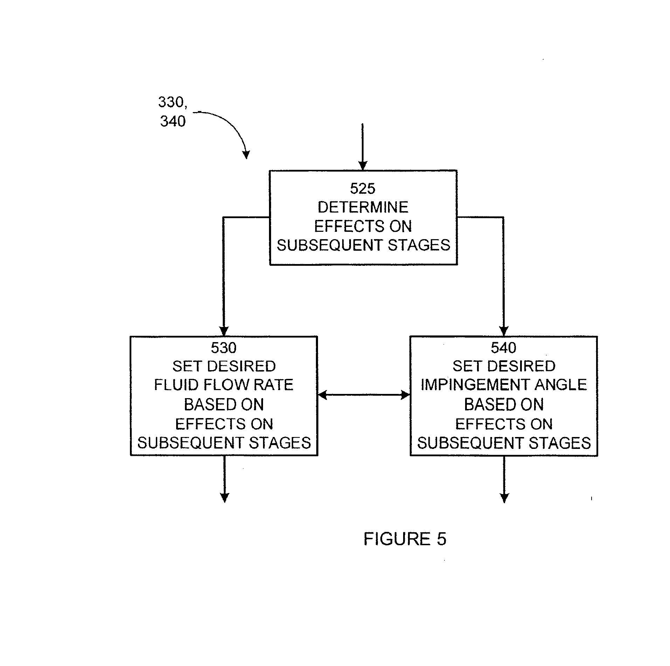

Figure 5 illustrates a flow chart of an example process to implement steps 330 and 340 to account for effects on subsequent stages when determining one or both of the fluid flow parameters according to an aspect of the present invention. In step 525, the system controller 170 determines the effects of the fluid flow rate and the impingement angle on fluid flow rates impingement angles to one or more subsequent stages of rotor blades. In step 530, the system controller 170 sets the desired fluid flow rate based on a consideration of the effects to the subsequent rotor blade stages. In step 540, the system controller 170 sets the desired impingement angle also based on the same or similar considerations.

The order in which steps 530 and 540 are performed is not particularly limited. Either or both of these steps can be performed. Also, these steps may be performed independent of each other, e.g., performed in parallel, perform one but not the other, perform both steps one after the other, and so on.

Referring back to Figure 3, there can be a host of reasons for determining one or both of the fluid flow parameters, and the particular combination of the parameters may differ depending on the circumstances, such as when the turbine system 100 is in full load operation or is in system start up. But whenever the system 100 is operating, it is desirable that the system 100 does not stall.

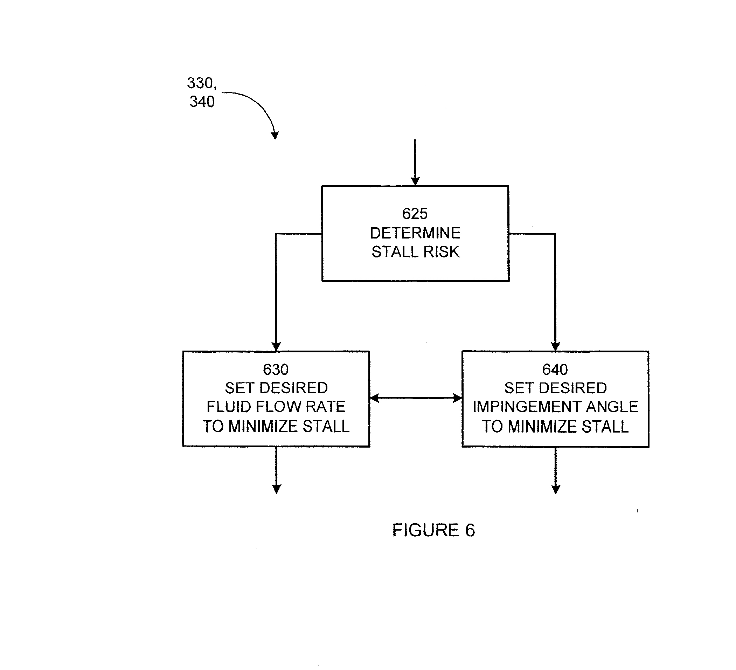

Figure 6 illustrates a flow chart of an example process to implement steps 330 and 340 to account reduce or even eliminate stall possibilities in determining one or both of the fluid flow parameters according to an aspect of the present invention. In step 625, the system controller 170 determines a risk of stall based on the sensor signals. For example, based on sensor signals from the fuel delivery unit 120 and the compressor 110, the system controller may determine that the fuel-to-air mixture being delivered to the combustor 130 is approaching lean blowout limit. As another example, acoustical sensors from the combustor 130 may indicate flame instability.

In step 630, the system controller 170 sets the desired fluid flow rate so as to minimize the stall risk. For example, the fluid flow rate may be reduced such that the richness of the fuel mixture is increased. In step 640, the system controller 170 sets the desired impingement angle also so as to minimize the stall risk. The order in which steps 630 and 640 are performed is not particularly limited. Either or both of these steps can be performed. Also, these steps may be performed independent of each other, e.g., performed in parallel, perform one but not the other, perform both steps one after the other, and so on.

In the examples and embodiments described above, both fluid flow parameters are set by the system controller 170 based on sensor and/or operation input signals. But there may be some circumstances in which one but not both fluid flow parameters is specified externally, i.e., one fluid flow parameter is specified outside of the system controller 170.

Referring back to Fig. 3, the external specification can be received as an operation input in step 320. If the fluid flow rate is externally specified, then steps 330 and 350 decompose into transmitting the fluid flow rate control signal corresponding to the specified fluid flow rate. If the impingement angle is externally specified in step 320, then steps 340 and 360 decompose into transmitting the impingement angle control signal corresponding to the specified impingement angle.

When one of the fluid flow parameters is externally specified, flexibility to optimize the operation of the system 100 will likely be reduced. But regardless, other parameter can still be determined so as to optimize the operation, albeit within a limited range.

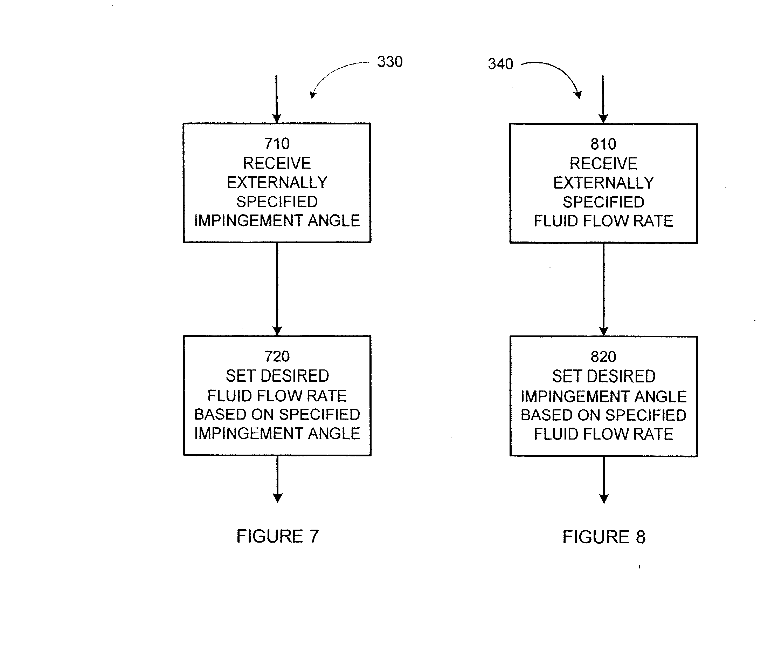

Figure 7 and 8 illustrate flow charts of example processes to implement steps 330 and 340, respectively, to determine one fluid flow parameter when the other is externally specified according to aspects of the present invention. To implement step 330 as illustrated in Figure 7, the system controller 170 receives the externally specified impingement angle in step 710. Then in step 720, the system controller 170 sets the desired fluid flow rate based on the externally specified impingement angle. While not specifically indicated in Figure 7, the system controller 170 may also determine the desired fluid flow rate based on the sensor and/or other operation input signals in addition to the externally specified impingement angle.

To implement step 340 as illustrated in Figure 8, the system controller 170 receives the externally fluid flow rate in step 810. Then in step 820, the system controller 170 sets the desired impingement angle based on the externally specified fluid flow rate. Again, while not specifically indicated in Figure 8, the system controller 170 may also determine the desired impingement angle based on the sensor and/or other operation input signals in addition to the externally specified fluid flow rate.

There are several advantages with the inventive aspect of the present invention. For example, being able to independently set both the fluid flow rate and the impingement angle enhances flexibility in optimizing the operability of the compressor, thus enhancing the operation of the gas turbine system as a whole. Also, intakes of existing turbine systems, such as those with IGVs, can be retrofitted relatively easily and economically. For example, the retrofit can be accomplished by incorporating the fluid flow control device and upgrading the system controller to take advantage of the fluid flow control device.

This written description uses examples to disclose the invention, including the best mode, and also to enable any person skilled in the art to practice the invention, including making and using any devices or systems and performing any incorporated methods. The patentable scope of the invention is defmed by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A method performed at or on behalf of a system controller of a gas turbine system to control a fluid flow rate of fluid entering an inlet of a compressor of the gas turbine system and/or to control an impingement angle of the fluid flowing to rotor blades in the compressor, the method comprising:
   receiving one or more sensor signals from one or more of the compressor, a fuel delivery unit, a combustor and a turbine of the gas turbine system or receiving one or more externally provided operation input signals or receiving both; setting a desired fluid flow rate or setting a desired impingement angle or setting both based on the sensor and/or operation input signals; and
   transmitting a fluid flow rate control signal in accordance with the desired fluid flow rate to a fluid flow control device or transmitting (360) an impingement angle control signal in accordance with the desired impingement angle to an impingement angle control device or transmitting both.
2. The method of clause 1,
   wherein the desired fluid flow rate is a desired flow rate of the fluid having passed through the impingement angle control device,
   wherein the step of setting the desired fluid flow rate and the step of transmitting the fluid flow rate control signal comprise:
   determining a flow rate change based on the desired impingement angle, the flow rate change being an amount of change in the flow rate of the fluid passing through the impingement angle control device;
   setting a compensation fluid flow rate, the compensation fluid flow rate being the flow rate of the fluid passing through the fluid flow control device sufficient to compensate for flow rate change, and
   transmitting the fluid flow rate control signal in accordance with the compensation fluid flow rate.
3. The method of clause 1,
   wherein the rotor blades is a first stage of a plurality of stages of rotor blades within the compressor downstream of the impingement angle control device, the first stage being immediately downstream of the impingement angle control device,
   wherein the desired impingement angle is a desired impingement angle of the fluid flowing to the first stage of rotor blades and the desired fluid flow rate is a desired flow rate of the fluid to the first stage, and
   wherein the step of setting the desired fluid flow rate and the step of step of setting the desired impingement angle comprise:
   determining effects on fluid flow rates and impingement angles to one or more subsequent stages of rotor blades; and
   setting the desired fluid flow rate or setting the desired impingement angle or setting both based on a consideration of the effects to the subsequent rotor blade stages.
4. The method of clause 1, wherein the step of setting the desired fluid flow rate and the step of setting the desired impingement angle comprise:
   determining a risk of stall based on the sensor signals; and
   setting the desired fluid flow rate or setting the desired impingement angle or setting both so as to minimize the stall risk.
5. The method of clause 1, wherein the step of setting the desired fluid flow rate comprises setting the desired fluid flow rate based on an externally specified impingement angle.
6. The method of clause 1, wherein the step of setting the desired impingement angle comprises setting the desired impingement angle based on an externally specified fluid flow rate.

## Claims

1. A compressor (110) of a gas turbine system arranged to compress fluid for combustion in a combustor with fuel, the compressor comprising:
a fluid flow control device (220) arranged to control a fluid flow rate of fluid entering an inlet (200) of the compressor; and
an impingement angle control device (230) downstream of the fluid flow control device and arranged to control an impingement angle of the fluid flowing to rotor blades (240) in the compressor,
wherein the fluid flow control device and the impingement angle control device are arranged to be independently operable.

2. The compressor of claim 1, wherein the fluid flow control device comprises a plurality of louvers.

3. The compressor of claim 1 or claim 2, wherein the impingement angle control device comprises a plurality of controllable dynamic foils.

4. The compressor of any preceding claim,
wherein the fluid flow control device is arranged to control the fluid flow rate based on a fluid flow rate control signal received from a system controller, and
wherein the impingement angle control device is arranged to control the impingement angle of the fluid based on an impingement angle control signal received from the system controller.

5. A gas turbine system, comprising:
a compressor (110) arranged to compress fluid;
a fuel delivery unit (120) arranged to deliver fuel;
a combustor (130) arranged to mix the compressed fluid discharged from the compressor with the fuel from the fuel delivery unit and combust the fuel and fluid mixture;
a turbine (140) arranged convert heat energy released from the combustion of the fuel and fluid mixture to mechanical energy for driving a load (160); and
a system controller (170) arranged to control an overall operation of the gas turbine system,
wherein the compressor comprises
a fluid flow control device (220) arranged to control a fluid flow rate of fluid entering an inlet of the compressor based on a fluid flow rate control signal from the system controller; and
an impingement angle control device (230) downstream of the fluid flow control device and arranged to control an impingement angle of the fluid flowing to rotor blades (240) in the compressor based on an impingement angle control signal from the system controller, and
wherein the fluid flow control device (220) and the impingement angle control device (230) are arranged to be independently operable.

6. The gas turbine system of claim 5, wherein the fluid flow control device comprises a plurality of louvers.

7. The gas turbine system of any one of claims 5 to 6, wherein the impingement angle control device comprises a plurality of guide vanes.

8. The gas turbine system of any one of claims 5 to 7, wherein the system controller is arranged to receive one or more sensor signals from one or more of the compressor, the fuel delivery unit, the combustor and the turbine or receive one or more externally provided operation input signals or receive both,
set a desired fluid flow rate or set a desired impingement angle or set both based on the sensor and/or operation input signals, and
transmit the fluid flow rate control signal in accordance with the desired fluid flow rate to the fluid flow control device or transmit the impingement angle control signal in accordance with the desired impingement angle to the impingement angle control device or transmit both.

9. The gas turbine system of claim 8,
wherein the desired fluid flow rate is a desired flow rate of the fluid having passed through the impingement angle control device, and
wherein the system controller is arranged to
determine a flow rate change based on the desired impingement angle, the flow rate change being an amount of change in the flow rate of the fluid passing through the impingement angle control device,
set a compensation fluid flow rate, the compensation fluid flow rate being the flow rate of the fluid passing through the fluid flow control device sufficient to compensate for flow rate change, and
transmit the fluid flow rate control signal in accordance with the compensation fluid flow rate.

10. The gas turbine system of claim 8 or claim 9,
wherein the rotor blades is a first stage of a plurality of stages of rotor blades within the compressor downstream of the impingement angle control device, the first stage being immediately downstream of the impingement angle control device,
wherein the desired impingement angle is a desired impingement angle of the fluid flowing to the first stage of rotor blades and the desired fluid flow rate is the flow rate of the fluid to the first stage, and
wherein the system controller is arranged to determine effects on fluid flow rates and impingement angles to one or more subsequent stages of rotor blades, set the desired fluid flow rate based on a consideration of the effects to the subsequent rotor blade stages, and set the desired impingement angle based on the consideration of the effects to the subsequent rotor blade stages.

11. The gas turbine system of any one of claims 8 to 10, the system controller is arranged to determine a risk of stall based on the sensor signals, and
set one or both of the desired flow rate and the desired impingement angle to mitigate the risk of stall.

12. The gas turbine system of any one of claims 8 to 11, wherein the system controller is arranged to set the desired fluid flow rate based on an externally specified impingement angle.

13. The gas turbine system of any one of claims 8 to 12, wherein the system controller is arranged to set the desired impingement angle based on an externally specified fluid flow rate.

14. A method performed at or on behalf of a system controller of a gas turbine system to control a fluid flow rate of fluid entering an inlet of a compressor of the gas turbine system and/or to control an impingement angle of the fluid flowing to rotor blades in the compressor, the method comprising:
receiving one or more sensor signals from one or more of the compressor, a fuel delivery unit, a combustor and a turbine of the gas turbine system or receiving one or more externally provided operation input signals or receiving both;
setting a desired fluid flow rate or setting a desired impingement angle or setting both based on the sensor and/or operation input signals; and
transmitting a fluid flow rate control signal in accordance with the desired fluid flow rate to a fluid flow control device or transmitting (360) an impingement angle control signal in accordance with the desired impingement angle to an impingement angle control device or transmitting both.

15. The method of claim 14,
wherein the desired fluid flow rate is a desired flow rate of the fluid having passed through the impingement angle control device,
wherein the step of setting the desired fluid flow rate and the step of transmitting the fluid flow rate control signal comprise:
determining a flow rate change based on the desired impingement angle, the flow rate change being an amount of change in the flow rate of the fluid passing through the impingement angle control device;
setting a compensation fluid flow rate, the compensation fluid flow rate being the flow rate of the fluid passing through the fluid flow control device sufficient to compensate for flow rate change, and
transmitting the fluid flow rate control signal in accordance with the compensation fluid flow rate.
